# EUROPEAN PATENT SPECIFICATION

(11) **EP 2 667 042 B1**
(45) Date of publication and mention of the grant of the patent: **23.03.2016**
(21) Application number: 13166929.3
(22) Date of filing: 08.05.2013
(51) Int. Cl.: F16B 5/02, B62D 25/16, B25B 13/06

(54) **Fastening method and fastening device**
Befestigungsverfahren und Befestigungseinrichtung
Procédé de fixation et dispositif de fixation

(30) Priority: 23.05.2012 DE 102012010429
(43) Date of publication of application: 27.11.2013
(73) Proprietor: Newfrey LLC, Newark, Delaware 19711 (US)
(72) Inventor: Werner, Wolfgang, 35394 Giessen (DE); Lautner, Siegfried, 35394 Giessen (DE); Hahn, Ernst-Ludwig, 35394 Giessen (DE)
(74) Representative: Witte, Weller & Partner Patentanwälte mbB

(56) References cited:
- WO-A1-2010/085902
- DE-A1- 3 736 637
- DE-A1- 4 022 299
- US-A- 2 973 677
- US-A1- 2010 162 519
- US-A1- 2010 278 612

## Description

The present invention relates to a method for the positionally accurate fastening of a first workpiece, which has a first main axis, on a second workpiece, which has a second main axis, in such a manner that the first main axis and the second main axis assume an angle greater than 0°.

In addition, the present invention relates to a fastening device for the positionally accurate fastening of a first workpiece on a second workpiece, in particular for carrying out the abovementioned method. Finally, the present invention also relates to a fastening arrangement with a first workpiece, with a second workpiece on which an anchor is secured, and with a fastening device which is fixed in a positionally accurate manner on the second workpiece by means of a fixing member, wherein the first workpiece is secured on a fastening portion of the fastening device.

In the area of fastening techniques, joining an anchor in the form of a stud onto a workpiece such as a sheet, for example by means of stud welding, is known. Securing fastening devices, which, as a rule, are produced from plastics material and are also called "clips", on these types of studs, is also known. These types of clips frequently include a fastening portion on which another component can be secured, for example a brake line, a cable loom or the like.

In this case, the clips, as a rule, are realized in one piece and secure the components on the workpiece in one position, the positioning of the component being subject to large tolerances. As these types of components are frequently mounted in a non-visible region of a motor vehicle or the like, positionally accurate fastening or fastening with small tolerances with regard to the positioning are not necessary.

Securing a component such as a body sheet or a trim component at an accurate spacing on a workpiece such as a body sheet is also known in the prior art (for example DE 10 2005 005 519 A1). In this case, a stop disc can be screw-connected onto a threaded stud for applying the component, an accurate spacing between the component and the workpiece being adjustable by rotating the stop disc.

US 2010/0162519 A1 describes a bushing that includes a first part having a threaded section that extends outwardly from a base section such that an upper surface of the base section defines a ledge that surrounds the threaded section. The adjustable bushing also includes a second part having a threaded opening that is open along a bottom surface of the second part. The threaded opening has threads that are complementary to threads of the threaded section of the first part to permit the first and second parts to be securely coupled to one another and permit a height of the bushing to be adjusted between a fully retracted position where a height of the bushing is at a minimum and a fully extended position where the height of the bushing is at a maximum.

In contrast, there is a requirement for a fastening method, by means of which workpieces can be fastened to each other in such a manner that their main axes can assume an angle greater than 0°. For example, the workpieces can be a mud guard and a vehicle body. Mud guards, in this case, are visible in the outside region of a motor vehicle and define a so-called clearance with the body or components connected thereto (for example doors). To obtain an impression of high quality, it is important to keep the clearance small and to develop the transitions between these types of workpieces such that they are aligned, for example, flush with each other. However, the methods for producing workpieces are, as a rule, tolerance-encumbered such that it is desirable to create a fastening device by means of which a first workpiece can be fastened in a positionally accurate manner on a second workpiece, for example a mud guard on a vehicle body. In particular, it should be possible in this case, by means of the fastening device, to realize an adjustment of a relative position in at least one direction, preferably in two directions aligned transversely with respect to each other.

This object is achieved on the one hand by a method for the positionally accurate fastening of a first workpiece, which has a first main axis, on a second workpiece, which has a second main axis, in such a manner that the first main axis and the second main axis can assume an angle greater than 0°, said method including the steps of:
- arranging a fastening device on an anchor which is secured on the second workpiece, wherein the fastening device has a first member and a second member, wherein the first member has a fastening portion for the first workpiece, wherein the first member and the second member are movable relative to each other in such a manner that the fastening portion is positionable in at least a first direction with regard to the second workpiece;
- moving the second member with regard to the first member for adjusting the position of the fastening portion in at least the first direction with regard to the second workpiece, wherein the first and the second member are rotatable against each other in order to position the fastening portion in the first direction with regard to the second workpiece, wherein, by means of a screw tool, the second member is rotated with regard to the first member by a hollow shaft of the screw tool being guided through an axial passage in the first member; and
- fixing the fastening device on the second workpiece using a fixing member which engages the anchor.

In addition, the above object is achieved by a fastening device for the positionally accurate fastening of a first workpiece, which has a first main axis, on a second workpiece, which has a second main axis, including a first member and a second member, wherein the first member has a fastening portion for the first workpiece, wherein the second member has a receptacle for an anchor secured on the second workpiece, wherein the second member has a hollow shaft portion which is introduced into an axial recess of the first member, wherein the first member and the second member are movable relative to each other in order to adjust the fastening portion in at least a first direction with regard to a supporting surface of the second member, wherein the first and the second member are rotatable against each other about an axis in order to adjust the fastening portion in at least the first direction with regard to the supporting surface of the second member, wherein the first member has an axial passage, through which a screw tool is introducible onto or into the hollow shaft portion.

In addition, the above object is achieved by a fastening arrangement with a first workpiece, with a second workpiece on which an anchor is secured, and with a fastening device of the abovementioned type which is fixed in a positionally accurate manner on the second workpiece by means of a fixing member, wherein the first workpiece is secured on a fastening portion of the fastening device. Finally, the above object is achieved by a screw tool for a fastening device of the abovementioned type, including a hollow shaft, the outside circumference of which has a polygonal portion.

The first and/or second workpiece can be elongated components, but in each case are preferably flat components. The first workpiece is preferably a mud guard of a vehicle body, and the second workpiece is preferably a portion of the chassis of the vehicle body.

The anchor, which is secured on the second workpiece, can be a stud. The stud, in this case, can be secured on the second workpiece by means of arbitrary methods, for example by means of stud welding, by means of bonding or by means of thermoplastic welding. The first and the second workpiece can be produced from metal, but can also be produced from a plastics material or from a composite material.

The second member of the fastening device is preferably supported on the second workpiece, by means of a supporting surface.

The fixing member can be realized, for example, as a nut or as a screw, the anchor in this case preferably being realized as a stud with an external thread or an internal thread.

The fastening device is preferably realized in a ring-shaped manner, both the first and also the second member being realized in a ring-shaped manner. In the case of a fastening arrangement according to the invention, the anchor in the form of a stud preferably passes through the first and the second member of the fastening device. The step of moving the first member with regard to the second member can be a rectilinear movement. In this case, it can be possible for the first member and the second member to engage each other by means of latching contours, such as, for example, tooth profiles. The step of fixing, in this case, can include that the first and the second member are fixed against each other in a relative position adjusted in this manner in order to fix the fastening device on the second workpiece in this manner. In other words, the step of fixing the fastening device can include the step of fixing the two members of the fastening device against each other, and also the step of securing the members, moved toward each other in this way, in this relative position on the second workpiece.

In this case, the fastening device is preferably arranged in the axial direction between the second workpiece and the fixing member, the concept of the axial arrangement relating to an anchor main axis (stud axis).

The first and the second member can be pre-assembled on each other such that the fastening device is available and manageable as a pre-assembled unit. The pre-assembly, in this case, can be effected by means of a latching device, which is released, for example, during the step of moving the second member with regard to the first member. The second member can maintain its rotational position in a substantial manner during the movement step.

By means of the fastening device according to the invention, two workpieces can also be secured in a relative manner on each other, the main axes of which extend parallel to each other. For example, the fastening device according to the invention can also serve for securing two flat workpieces on each other at a positionally accurate spacing parallel to each other.

The object is consequently completely achieved.

In the case of the method according to the invention, it is particularly preferred when the first direction is aligned parallel to an anchor main axis of the anchor such as a stud axis of a stud.

In the case of said embodiment, the moving of the first member with regard to the second member serves to adjust a vertical position of the first workpiece with regard to a surface of the second workpiece.

An adjustment of the position of the fastening portion in a second direction, which is aligned transversely with respect to the first direction, is generally possible by the fastening device having a further member (third member), the first or the second member being movable relative to each other with regard to the third member in order to adjust the position of the fastening portion in the second direction with regard to the second workpiece.

However, it is particularly preferred when the second member is arranged on the anchor such that, prior to the fixing step, it is movable in at least a limited manner in a second direction which is aligned transversely with respect to the first direction.

In the case of said embodiment, the adjustability of the position of the fastening portion in the second direction is made possible by the fastening device or the second member being mounted on the anchor or the stud so as to be movable in at least a limited manner in said second direction. In other words, the adjustment in the second direction can be effected by means of relative movement of the fastening device or of the second member in the second direction, prior to the fixing step.

In this way, the first workpiece can be fastened on the second workpiece in a positionally accurate manner in two directions.

As mentioned above, the relative mobility of the first and of the second member can be realized such that said members are offset against each other in a linear manner, for example in the first direction.

Advantageously the first and the second member are rotatable against each other in order to position the fastening portion in the first direction with regard to the second workpiece.

In this connection, the first and the second member can be rotatable about an axis which, for example, is aligned parallel to an anchor main axis.

In this case, the first and the second member can be connected together by means of a screw connection.

However, it is particularly preferred when the first member has a first ramp device facing the second member and/or when the second member has a second ramp device facing the first member.

In the case of said embodiment, high forces can be transmitted in the first direction by means of the fastening device.

In the case of the method according to the invention, it is altogether preferred when, prior to the securing of the first workpiece on the fastening portion, a template is secured on the fastening portion, said template being fixed rigidly with regard to the second workpiece, wherein subsequently the position of the fastening portion is adjusted, wherein further subsequently the fastening device fixed on the second workpiece, and wherein finally the template is removed and the first workpiece is secured on the fastening portion.

In the case of said embodiment, the adjustment of the fastening device can be effected by means of the template which, for example, is fixed on the second workpiece. For the case where the first workpiece is a mud guard, the template can be fixed for example to hinges for a door of a motor vehicle, and consequently can be fixed directly or indirectly with regard to the second workpiece.

In the case of the fastening device according to the invention, it is additionally advantageous when the first and/or the second ramp device has a screw-shaped ramp portion which is arranged radially inside and a screw-shaped ramp portion which is arranged radially outside.

In the case of said embodiment, it can be achieved that two contours of the first member and second member are always engaged with each other. This means that fastening device safety against tilting can be improved with regard to an anchor main axis.

In this case, the ramp portions arranged on the inside and on the outside can be offset against each other in the circumferential direction in such a manner that the lowest points of the ramp portions are arranged offset by 180° with regard to a longitudinal axis of the fastening device.

Further, the second member has a hollow shaft portion which is introduced into an axial recess of the first member.

In this way, the first and the second member can be pre-assembled on each other. In this case, a latching device, which acts in a pre-assembly position between the first member and the second member, can also be provided.

According to a further preferred embodiment, the hollow shaft portion has a polygonal shape on its inside circumference and/or on its outside circumference for applying a screw tool.

In the case of this variant, it is advantageous for the adjustment of the relative position between the first member and the second member to be effected by rotating the second member, that is that member which rests on the second workpiece. This means that the basic position of the fastening portion of the first member can be maintained whilst the relative rotation of the first and second member is effected.

It is particularly advantageous that the first member has an axial passage, through which the screw tool is introducible onto the or into the hollow shaft portion.

In this connection, the rotation of the second member can be effected with regard to the first member by the screw tool being guided through the axial passage. In this way, it is not necessary to provide a portion for applying a tool on the outside periphery of the second member. As an alternative or in addition to this, the second member can be rotatable by hand (e.g. by grasping latching lugs provided on the second member).

The first workpiece can be secured on the fastening portion of the first member in an arbitrary manner, for example by screw-connection or the like.

However, it is particularly preferred when the fastening portion has latching means for securing the first workpiece in a positionally accurate manner. This means that the assembly of the first workpiece on the second workpiece can be simplified.

In the case of the fastening arrangement according to the invention, it is advantageous when a hollow shaft portion of the second member of the fastening device has an inside diameter which is greater than an outside diameter of the anchor (in particular of the stud), in such a manner that, prior to its fixing, the fastening device is movable in the radial direction with regard to the anchor.

The achievement of said measure is that the second member or the fastening device can be arranged on the anchor such that, prior to the fixing step, it is movable in at least a limited manner in a second direction (radial direction).

In the case of said embodiment it is obvious that this means that mobility is possible not only in a second direction, which is aligned transversely with respect to the first direction, but also in a further (third) direction, which is aligned transversely with respect to the first direction. The second and the third direction, in this case, preferably span a plane which is parallel to a surface of the second workpiece.

The above invention is additionally complemented by a screw tool for a fastening device according to the invention, the screw tool having a hollow shaft, the outside circumference of which has a polygonal portion.

By means of such a screw tool, the second member can be rotated with regard to the first member by the hollow shaft being guided through the axial passage in the first member.

In this case, the anchor (stud) can enter into the hollow shaft such that the anchor is not able to impede the adjusting operation.

The first workpiece preferably has a lateral recess or through-bore into which the latching means can latch for securing the first workpiece on the first member in a positionally accurate manner.

It is obvious that the abovementioned features and the features yet to be mentioned below are usable not only in the combination specified in each case, but also in other combinations or standing alone without departing from the framework of the present invention.

Exemplary embodiments of the invention are shown in the drawing and are explained in the following description, in which, in detail:
- Fig. 1: shows an exploded representation of a schematic longitudinal sectional view through a first embodiment of a fastening arrangement according to the invention;
- Fig. 2: shows a perspective part sectional view of an embodiment of a fastening device according to the invention;
- Fig. 3: shows a perspective view inclinedly from below of a first member of the fastening device of Fig. 2;
- Fig. 4: shows a perspective view inclinedly from above of a second member of the fastening device of Fig. 2;
- Fig. 5: shows a longitudinal sectional view through the fastening device of Fig. 2 in a pre-assembly position;
- Fig. 6: shows a representation comparable to Fig. 5 after a rotation of the first and of the second member by approximately 180°;
- Fig. 7: shows a representation comparable to Fig. 5 after a rotation of the first and of the second member by approximately 360°;
- Fig. 8: shows a perspective representation of a fastening arrangement by means of the fastening device of Fig. 2 to 7; and
- Fig. 9: shows a perspective representation of an embodiment of a screw tool according to the invention.

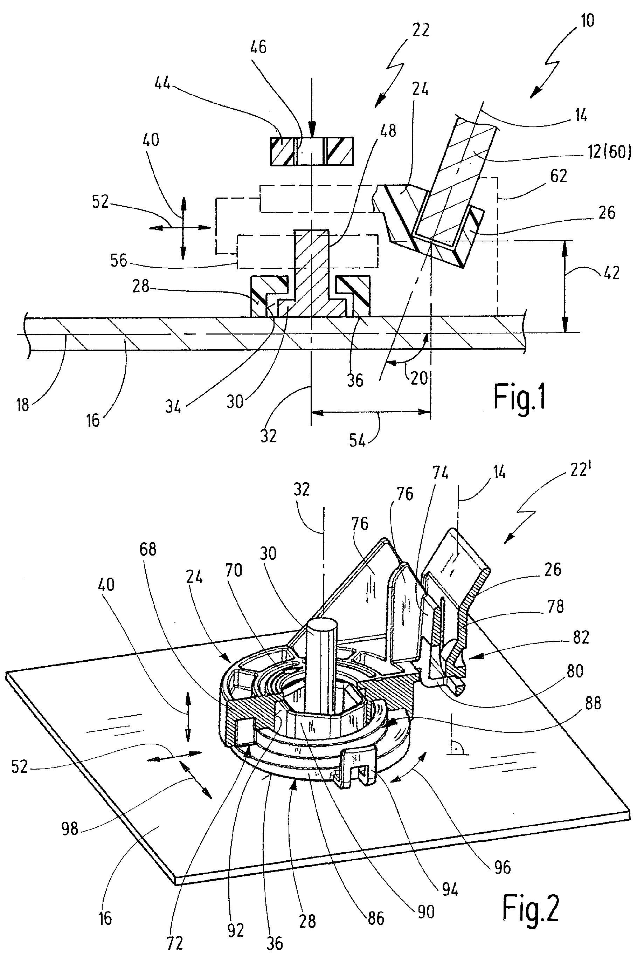

Figure 1 shows a schematic representation of a first embodiment of a fastening arrangement according to the invention which is given the general reference 10.

The fastening arrangement 10 has a first workpiece 12 such as, for example, a mud guard of a body of a motor vehicle which has a first main axis 14. In addition, the fastening arrangement 10 has a second workpiece 16, which can be, for example, a portion of a chassis of a vehicle body, the second workpiece 16 having a second main axis 18.

The first main axis 14 and the second main axis 18 are arranged with respect to each other at an angle 20 which is preferably greater than 0°. In particular, the first workpiece 12 and the second workpiece 16 are substantially at right angles with respect to each other.

The fastening arrangement 10 additionally includes a fastening device 22, by means of which the first workpiece 12 is fastenable on the second workpiece 16. The fastening device 22 has a first member 24. The first member 24 includes a fastening portion 26, on which the first workpiece 12 is fastenable.

In addition, the fastening device 22 has a second member 28 which is preferably realized as a separate component from the first member 24 and is mounted so as to be movable in the direction of rotation in relation to said first member 24. The members 24, 28 are coupled in the radial direction, preferably in a positive-locking manner.

In this case, the second member 28 is realized as a ring member which is arranged around an anchor in the form of a stud 30. The stud 30 is joined onto a surface of the second workpiece 16, for example by means of stud welding, by means of stud bonding, by means of thermoplastic welding or the like. The stud 30 has a stud main axis 32 which is aligned perpendicularly with respect to the surface of the second workpiece 16. The second member 28 has a stud receptacle 34, in which at least one portion of the stud 30 can be received. A surface of the second member 28 remote from the first member 24 serves as a supporting surface 36 for support on the surface of the second workpiece 16.

The first member 24 and the second member 28 are movable relative to each other such that the fastening portion 26 is adjustable in a first direction 40 with regard to the second workpiece 16. The first direction 40 is preferably a direction which is aligned parallel to the stud main axis 32, that is to say a vertical direction. Through the relative mobility of the first and of the second member 24, 28, a first required position 42 can consequently be set in the first direction 40

A fixing member 44, which in the present case is realized, by way of example, as a nut with an internal thread 46, serves to fix the first member 24 and the second member 28 on each other and to fix the fastening device 22 on the second workpiece 16. In the case of the present embodiment, the stud 30 is preferably realized with an external thread 48. Fixing is effected consequently by the fixing member 44 being screw-connected onto the stud 30, the relative position between the members 24, 28 and the relative position of the fastening device 22 being fixed with regard to the second workpiece 16.

In addition, the first and the second member 24, 28 can be movable in a second direction relative to each other in order, in this way, to make it possible to adjust the fastening portion 26 also in a second direction 52 with regard to the second workpiece 16. For example, this means that it is possible to set a second required position 54 which can be defined by the spacing between the stud main axis 32 and the fastening portion 26 (as shown at 54).

In order to make adjustability in the second direction 52 possible, the fastening device 22 can additionally have a third member 56, which is movable relative to the first member 24 or relative to the second member 28 in order to make adjustability in the second direction 52 possible.

A template 60, which is similar in shape to the first workpiece 12 in at least a fastening region and consequently can be inserted into the fastening portion 26, is preferably used to fasten the first workpiece 12 on the second workpiece 16. The template 60 is then temporarily fixed directly or indirectly with regard to the second workpiece 16 (shown at 62). This means that through relative movement between the first member 24 and the second member 28, adjustment of the fastening portion 26 in the first direction 40 into the first required position 42 and, where applicable, adjustment in the second direction 52 into the second required position 54 can be effected. The two members 24, 28 are then fixed in the adjusted relative position, and the fastening device 22 is fixed on the second workpiece 16 all in all by means of the fixing member 44. The template 60 can then be removed and the workpiece 12 can be inserted into the fastening portion 26 in order to realize, in this manner, positionally accurate fastening of the first workpiece 12 on the second workpiece 16.

The following figures show a further embodiment of a fastening arrangement 10 with a fastening device 22', which corresponds in general to the fastening device 22 shown in Figure 1 with regard to design and method of operation. Identical elements are consequently marked by identical reference numbers. Essentially the differences are explained below.

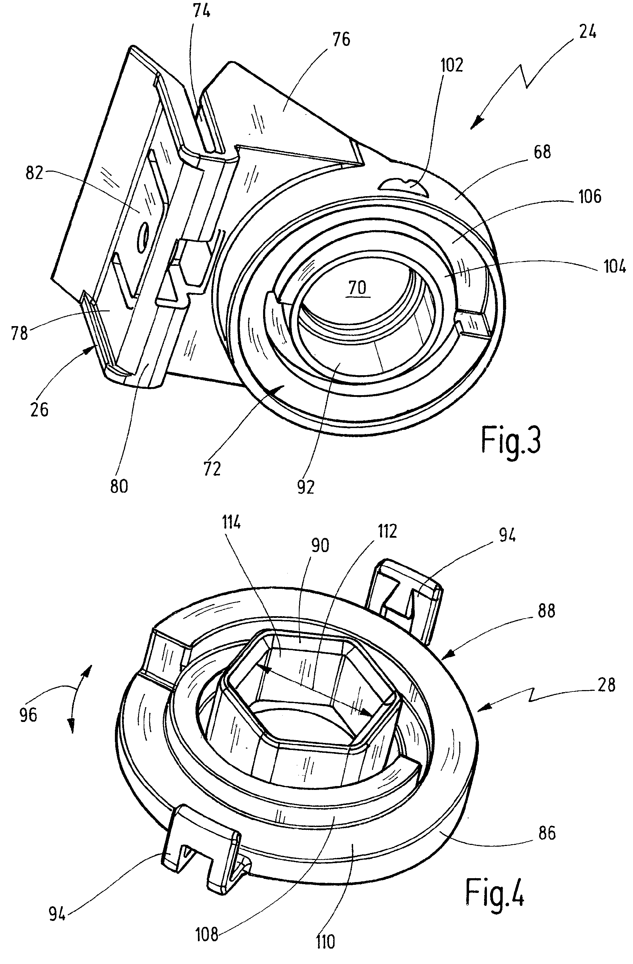

The first member 24 shown in Figures 2 and 3 has a ring portion 68 which is aligned in a concentric manner with respect to the stud main axis 32. The ring portion 68 includes an axial passage 70, through which the stud 30 is guided when the fastening device 22 rests on the surface of the second workpiece 16. In this way, a fixing member 44 can engage the portion of the stud 30 protruding with respect to the fastening device 22 in order to fix the fastening device 22.

A first ramp device 72, which is realized essentially in a screw-shaped or helical manner and is facing the second member 28, is realized on an under surface of the first member 24.

The fastening portion 26 is secured on an outside circumferential portion of the ring portion 68. The fastening portion 26, in this case, has a first fastening wall 74 which is connected to the ring portion 68 by means of a plurality of struts 76. The first fastening wall 74 is aligned parallel to the first main axis 14 which, in its turn, is offset in parallel or inclinedly with respect to the stud main axis 32. The fastening portion 26 also includes a second fastening wall 78, which is aligned parallel to the first fastening wall 74 and is connected to said first fastening wall by means of a fastening base 80. A first workpiece 12 in the form of a flat component can consequently be inserted between the first and the second fastening wall 74, 78 as far as up to the fastening base 80. In the present case, the fastening device 22 also includes latching means 82 in the form of a latching tongue which is arranged on the second fastening wall 78. When the first workpiece 12 is inserted, the latching tongue is deflected in relation to the second fastening wall 78 until the latching tongue latches into a latching recess of the first workpiece 12 (not shown in any more detail in the figures) such that the first workpiece 12 is securable in a positionally accurate manner on the fastening portion 26.

The second member 28 has a ring body 86, the under surface of which forms the supporting surface 36. The top surface of the ring body 86 has a second ramp device 88, which is realized in a screw-like manner like the first ramp device 72. The first and the second ramp device 72, 88 are adapted to each other in such a manner that the first required position 42 can be set by means of relative rotation of the first and of the second member 24, 28.

The ring body 86 has a hollow shaft portion 90 radially inside the second ramp device 88. The hollow shaft portion 90, which is shown with greater accuracy in Figure 4, is realized in cross section preferably in a polygonal manner and its dimension is such that it is insertable into an axial recess 92 of the first member 24 (see Figure 3).

At least one, preferably two diametrically opposed latching lugs 94 are provided on an outside circumference of the ring body 86, said latching lugs being able to engage in corresponding latching indentations 102 of the first member 24 in a pre-assembly position.

Figure 2 shows that the second member 28 can be rotated in relation to the first member 24 (see reference 96) in order to adjust the position of the fastening portion 26 in the first direction 40 with regard to the second workpiece 16.

An inside diameter 112 of the hollow shaft portion 90, in this case, is greater than an outside diameter 116 of the stud 30 such that the second member 28 and the first member 24 coupled hereto are movable in the second direction 52 in relation to the stud 30 (are movable in a limited manner) in order, in this way, to obtain adjustment in the second direction 52. In this case, it is also possible to effect an adjustment in a third direction 98 which is aligned transversely with respect to the second direction 52 and with the latter spans a plane which is aligned parallel to the surface of the second workpiece 16.

A latching indentation 102 for a latching lug 94 is shown in greater accuracy in Figure 3.

Figure 3 also shows that the first ramp device 72 has a first inside ramp portion 104 and a first outside ramp portion 106. The ramp portions 104, 106, in this case, are offset against each other by 180°.

Figure 4 shows that the second ramp device 88 has a second inside ramp portion 108 and a second outside ramp portion 110. In the coupled state, the first inner ramp portion 104 rests on the second inner ramp portion 108. In addition, the first outside ramp portion 106 rests on the second outside ramp portion 110. The achievement of the offset arrangement of the ramp portions, in this case, is that force transmission is possible in the axial direction always by means of at least two surfaces, as a result of which the safety against tilting in relation to the stud main axis 32 is improved.

Figure 4 also shows the inside diameter 112 of the hollow shaft portion 90. It can also be seen that the hollow shaft portion 90 can have a polygonal shape both on the inside circumference and on the outside circumference.

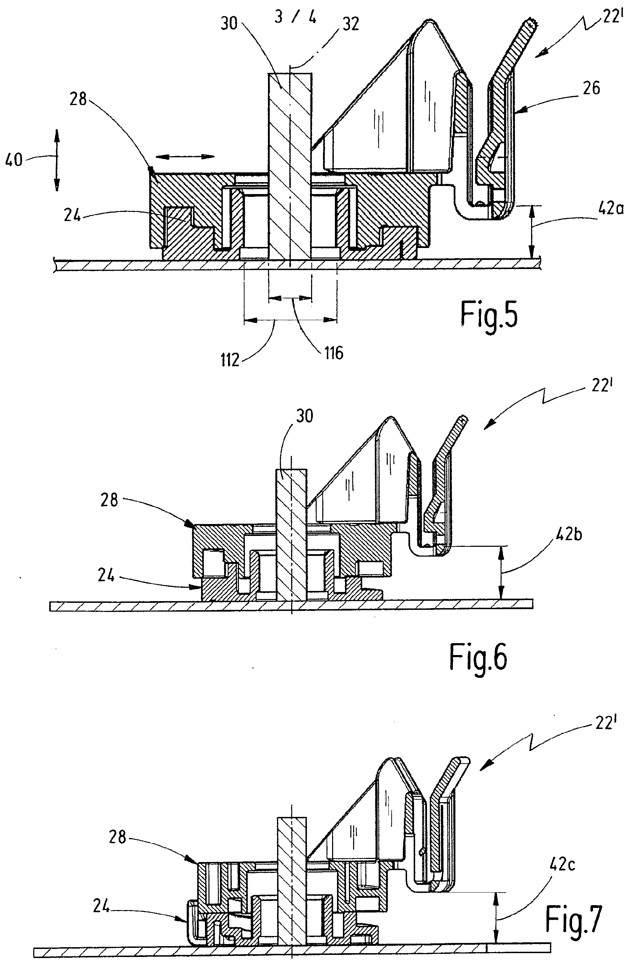

Figures 5 to 7 show the first and the second member 24, 28 in different relative rotational positions. Figure 5, in this case, shows an initial position where the latching lugs 94 engage in the latching indentations 104. This corresponds to a pre-assembly position of the fastening device 22'.

It can be recognized in this connection that the outside diameter 116 of the stud 30 is smaller than the inside diameter 112 of the hollow shaft portion 90. The inside diameter 112 is preferably 1.2 times as great as the stud outside diameter 116, in particular at least 1.5 times as great as the stud outside diameter 116. The inside diameter 112 is preferably smaller than three times the stud outside diameter 116, preferably smaller than 2.5 times the stud outside diameter 116.

In the pre-assembly position shown in Figure 5, a first required position 42a is set up which is the lowest possible required position.

By rotating the second member 28 with regard to the first member 24, the first member 24 can be lifted in relation to the second member 28, on account of the interaction between the first and the second ramp device 72, 88. This means that, for example, in the case of a rotation about approximately 180°, a second required position 42b is set up which is higher than the first required position 42a.

Figure 7 shows a representation where the two members 24, 28 are rotated in a maximum manner against each other. In this case a third required position 42c is set up which is higher than the second required position 42b.

It can be seen in Figures 5 to 7 that at least two surfaces of the ramp devices 72, 88 always engage each other such that a high level of safety against tilting is ensured.

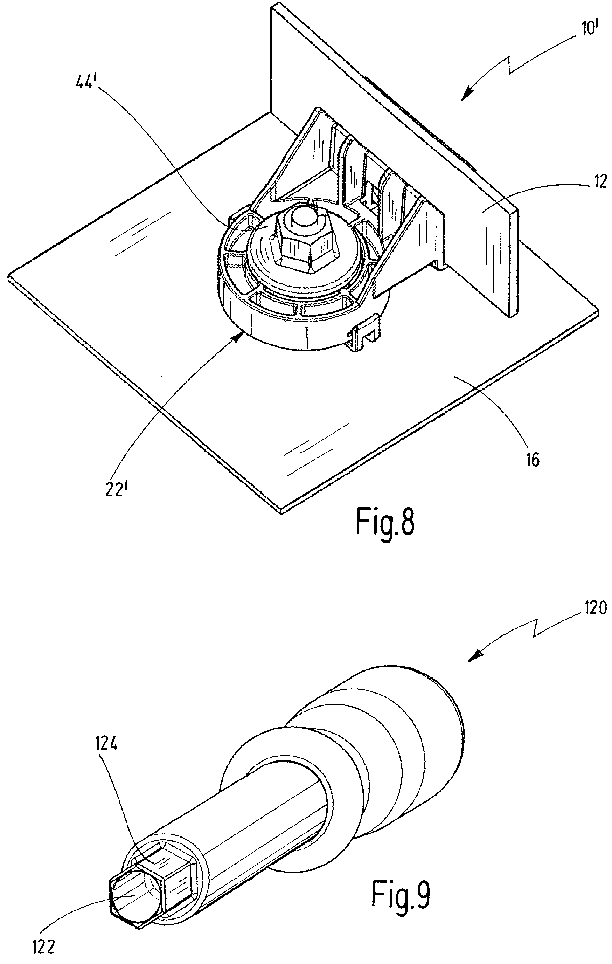

Figure 8 shows finally a completed fastening arrangement 10' where the fastening device 22' has been fixed with regard to the second workpiece 16 by means of a fixing member 44'. The fixing member 44', in the present case, is realized as a nut with a comparatively large annular flange which rests in a flat manner on top of the first member 24.

In addition Figure 8 shows that a first workpiece 12 is inserted into the fastening portion 26 of the first member 24.

Figure 9 shows a screw tool which has a hollow shaft 122, the inside diameter of which is greater than the stud outside diameter 116. A polygonal portion 124, which can engage the inside circumference of the hollow shaft portion 90 in order, in this way, to rotate the second member 28 with regard to the first member 24 and consequently to adjust the position of the fastening portion 26 in the first direction 40, is realized on the outside circumference of the hollow shaft 122.

## Claims

1. Method for the positionally accurate fastening of a first workpiece (12), which has a first main axis (14), on a second workpiece (16), which has a second main axis (18), in such a manner that the first main axis (14) and the second main axis (18) can assume an angle (20) greater than 0°, said method including the steps of:
- arranging a fastening device (22) on an anchor (30) which is secured on the second workpiece (16), wherein the fastening device (22) has a first member (24) and a second member (28), wherein the first member (24) has a fastening portion (26) for the first workpiece (12), wherein the first member (24) and the second member (28) are movable relative to each other in such a manner that the fastening portion (26) is positionable in at least a first direction (40) with regard to the second workpiece (16);
- moving the second member (28) with regard to the first member (24) for adjusting the position of the fastening portion (26) in at least the first direction (40) with regard to the second workpiece (16), wherein the first and the second member (24, 28) are rotatable against each other in order to position the fastening portion (26) in the first direction (40) with regard to the second workpiece (16), wherein, by means of a screw tool (120), the second member (28) is rotated with regard to the first member (24) by a hollow shaft (122) of the screw tool (120) being guided through an axial passage (70) in the first member (24); and
- fixing the fastening device (22) on the second workpiece (16) using a fixing member (44) which engages the anchor (30).

2. Method according to Claim 1, wherein the first direction (40) is aligned parallel to an anchor main axis (32) of the anchor (30).

3. Method according to Claim 1 or 2, wherein the second member (28) is arranged on the anchor (30) such that, prior to the fixing step, it is movable in at least a limited manner in a second direction (52) which is aligned transversely with respect to the first direction (40).

4. Method according to one of Claims 1 to 3, wherein prior to the securing of the first workpiece (12) on the fastening portion (26), a template (60) is secured on the fastening portion (26), said template being fixed rigidly with regard to the second workpiece (16), wherein subsequently the position (42; 54) of the fastening portion (26) is adjusted, wherein subsequently the fastening device (22) is fixed on the second workpiece (16), and wherein subsequently the template (60) is removed and the first workpiece (12) is secured on the fastening portion (26).

5. Fastening device (22) for the positionally accurate fastening of a first workpiece (12), which has a first main axis (14), on a second workpiece (16), which has a second main axis (18), in particular for carrying out the method according to one of Claims 1 to 4, said fastening device including a first member (24) and a second member (28), wherein the first member (24) has a fastening portion (26) for the first workpiece (12), wherein the second member (28) has a hollow shaft portion (90) which is introduced into an axial recess (92) of the first member (24), wherein the first member (24) and the second member (28) are movable relative to each other in order to adjust the fastening portion (26) in at least a first direction (40) with regard to a supporting surface (36) of the second member (28),
**characterized in that**
the second member (28) has a receptacle (34) for an anchor (30) secured on the second workpiece (16), wherein the first and the second member (24, 28) are rotatable against each other about an axis (32) in order to adjust the fastening portion (26) in at least the first direction (40) with regard to the supporting surface (36) of the second member (28), wherein the first member (24) has an axial passage (70), through which a screw tool (120) is introducible onto or into the hollow shaft portion (90).

6. Fastening device according to Claim 5, wherein the first member (24) has a first ramp device (72) facing the second member (28) and/or wherein the second member (28) has a second ramp device (88) facing the first member (24).

7. Fastening device according to Claim 6, wherein the first and/or the second ramp device (72; 88) has a screw-shaped ramp portion (104; 108) which is arranged radially inside and a screw-shaped ramp portion (106; 110) which is arranged radially outside.

8. Fastening device according to Claim 5, wherein the hollow shaft portion (90) has a polygonal shape (114) on its inside circumference and/or on its outside circumference, for applying a screw tool (120).

9. Fastening device according to one of Claims 5 to 8, wherein the fastening portion (26) of the first member (24) has latching means (82) for securing the first workpiece (12) on the first member (24) in a positionally accurate manner.

10. Fastening arrangement (10) with a first workpiece (12), with a second workpiece (16) on which an anchor (30) is secured, and with a fastening device (22) according to one of Claims 5 to 9, which is fixed in a positionally accurate manner on the second workpiece (16) by means of a fixing member (44), wherein the first workpiece (12) is secured on a fastening portion (26) of the fastening device (22).

11. Fastening arrangement according to Claim 10, wherein a hollow shaft portion (90) of the second member (28) of the fastening device (22) has an inside diameter (112) which is greater than an outside diameter (116) of the anchor (30), in such a manner that, prior to its fixing, the fastening device (22) is movable in the radial direction (52, 98) with regard to the anchor (30).

## Patentansprüche

1. Verfahren zum positionsgenauen Befestigen eines ersten Werkstückes (12), das eine erste Hauptachse (14) aufweist, an einem zweiten Werkstück (16), das eine zweite Hauptachse (18) aufweist, derart, dass die erste Hauptachse (14) und die zweite Hauptachse (18) einen Winkel (20) größer 0° einnehmen können, mit den Schritten:
- Anordnen einer Befestigungseinrichtung (22) an einem Anker (30), der an dem zweiten Werkstück (16) festgelegt ist, wobei die Befestigungseinrichtung (22) ein erstes Glied (24) und ein zweites Glied (28) aufweist, wobei das erste Glied (24) einen Befestigungsabschnitt (26) für das erste Werkstück (12) aufweist, wobei das erste Glied (24) und das zweite Glied (28) derart zueinander beweglich sind, dass der Befestigungsabschnitt (26) in wenigstens einer ersten Richtung (40) in Bezug auf das zweite Werkstück (16) positionierbar ist;
- Bewegen des zweiten Gliedes (28) in Bezug auf das erste Glied (24) zum Einstellen der Position des Befestigungsabschnittes (26) in wenigstens der ersten Richtung (40) in Bezug auf das zweite Werkstück (16), wobei das erste und das zweite Glied (24, 28) gegeneinander verdrehbar sind, um den Befestigungsabschnitt (26) in der ersten Richtung (40) in Bezug auf das zweite Werkstück (16) zu positionieren, wobei das zweite Glied (28) mittels eines Schraubwerkzeuges (120) in Bezug auf das erste Glied (24) verdreht wird, indem ein Hohlschaft (122) des Schraubwerkzeugs (120) durch eine Axialdurchbrechung (70) in dem ersten Glied (24) hindurch geführt wird; und
- Fixieren der Befestigungseinrichtung (22) an dem zweiten Werkstück (16) unter Verwendung eines Fixiergliedes (44), das an dem Anker (30) angreift.

2. Verfahren nach Anspruch 1, wobei die erste Richtung (40) parallel zu einer Ankerhauptachse (32) des Ankers (30) ausgerichtet ist.

3. Verfahren nach Anspruch 1 oder 2, wobei das zweite Glied (28) so an dem Anker (30) angeordnet wird, dass es vor dem Fixierschritt in einer zweiten Richtung (52) zumindest begrenzt beweglich ist, die quer zu der ersten Richtung (40) ausgerichtet ist.

4. Verfahren nach einem der Ansprüche 1 bis 3, wobei vor dem Festlegen des ersten Werkstückes (12) an dem Befestigungsabschnitt (26) eine Lehre (60) an dem Befestigungsabschnitt (26) festgelegt wird, die starr in Bezug auf das zweite Werkstück (16) fixiert wird, wobei anschließend die Position (42; 54) des Befestigungsabschnittes (26) eingestellt wird, wobei anschließend die Befestigungseinrichtung (22) an dem zweiten Werkstück (16) fixiert wird, und wobei anschließend die Lehre (60) entfernt und das erste Werkstück (12) an dem Befestigungsabschnitt (26) festgelegt wird.

5. Befestigungseinrichtung (22) zum positionsgenauen Befestigen eines ersten Werkstückes (12), das eine erste Hauptachse (14) aufweist, an einem zweiten Werkstück (16), das eine zweite Hauptachse (18) aufweist, insbesondere zur Durchführung des Verfahrens nach einem der Ansprüche 1 bis 5, mit einem ersten Glied (24) und einem zweiten Glied (28), wobei das erste Glied (24) einen Befestigungsabschnitt (26) für das erste Werkstück (12) aufweist, wobei das zweite Glied (28) einen Hohlschaftabschnitt (90) aufweist, der in eine Axialausnehmung (92) des ersten Gliedes (24) eingeführt ist, wobei das erste Glied (24) und das zweite Glied (28) zueinander beweglich sind, um den Befestigungsabschnitt (26) in wenigstens einer ersten Richtung (40) in Bezug auf eine Auflagefläche (36) des zweiten Gliedes (28) zu verstellen,
**dadurch gekennzeichnet, dass**
das zweite Glied (28) eine Aufnahme (34) für einen Anker (30) aufweist, der an dem zweiten Werkstück (16) festgelegt ist,
wobei das erste und das zweite Glied (24, 28) gegeneinander um eine Achse (32) verdrehbar sind, um den Befestigungsabschnitt (26) in wenigstens der ersten Richtung (40) in Bezug auf die Auflagefläche (36) des zweiten Gliedes (28) zu verstellen, wobei das erste Glied (24) eine Axialdurchbrechung (70) aufweist, durch die hindurch ein Schraubwerkzeug (120) auf den oder in den Hohlschaftabschnitt (90) einführbar ist.

6. Befestigungseinrichtung nach Anspruch 5, wobei das erste Glied (24) eine dem zweiten Glied (28) zugewandte erste Rampeneinrichtung (72) aufweist und/oder wobei das zweite Glied (28) eine dem ersten Glied (24) zugewandte zweite Rampeneinrichtung (88) aufweist.

7. Befestigungseinrichtung nach Anspruch 7, wobei die erste und/oder die zweite Rampeneinrichtung (72; 88) einen radial innen angeordneten schraubenförmigen Rampenabschnitt (104; 108) und einen radial außen angeordneten schraubenförmigen Rampenabschnitt (106; 110) aufweist.

8. Befestigungseinrichtung nach Anspruch 5, wobei der Hohlschaftabschnitt (90) an seinem Innenumfang und/oder an seinem Außenumfang eine Polygonform (114) zum Ansetzen eines Schraubwerkzeuges (120) aufweist.

9. Befestigungseinrichtung nach einem der Ansprüche 5 bis 8, wobei der Befestigungsabschnitt (26) des ersten Gliedes (24) Rastmittel (82) zum positionsgenauen Festlegen des ersten Werkstückes (12) an dem ersten Glied (24) aufweist.

10. Befestigungsanordnung (10) mit einem ersten Werkstück (12), mit einem zweiten Werkstück (16), an dem ein Anker (30) festgelegt ist, und mit einer Befestigungseinrichtung (22) nach einem der Ansprüche 5 bis 9, die mittels eines Fixiergliedes (44) positionsgenau an dem zweiten Werkstück (16) fixiert ist, wobei das erste Werkstück (12) an einem Befestigungsabschnitt (26) der Befestigungseinrichtung (22) festgelegt ist.

11. Befestigungsanordnung nach Anspruch 10, wobei ein Hohlschaftabschnitt (90) des zweiten Gliedes (28) der Befestigungseinrichtung (22) einen Innendurchmesser (112) aufweist, der größer ist als ein Außendurchmesser (116) des Ankers (30), derart, dass die Befestigungseinrichtung (22) vor ihrer Fixierung in radialer Richtung (52, 98) in Bezug auf den Anker (30) beweglich ist.

## Revendications

1. Procédé pour fixer dans une position précise une première pièce (12), qui présente un premier axe principal (14), sur une deuxième pièce (16), qui présente un deuxième axe principal (18), de telle sorte que le premier axe principal (14) et le deuxième axe principal (18) puissent adopter un angle (20) supérieur à 0°, ledit procédé comprenant les étapes suivantes:
- agencer un dispositif de fixation (22) sur un ancrage (30) qui est fixé sur la deuxième pièce (16), dans lequel le dispositif de fixation (22) comprend un premier élément (24) et un deuxième élément (28), dans lequel le premier élément (24) comprend une partie de fixation (26) pour la première pièce (12), dans lequel le premier élément (24) et le deuxième élément (28) sont mobiles l'un par rapport à l'autre de telle sorte que la partie de fixation (26) puisse être positionnée dans au moins une première direction (40) par rapport à la deuxième pièce (16);
- déplacer le deuxième élément (28) par rapport au premier élément (24) afin de régler la position de la partie de fixation (26) au moins dans la première direction (40) par rapport à la deuxième pièce (16), dans lequel les premier et deuxième éléments (24, 28) peuvent tourner l'un contre l'autre dans le but de positionner l'élément de fixation (26) dans la première direction (40) par rapport à la deuxième pièce (16), dans lequel, au moyen d'un outil de vissage (120), le deuxième élément (28) est tourné par rapport au premier élément (24) par un arbre creux (122) de l'outil de vissage (120) qui est guidé à travers un passage axial (70) dans le premier élément (24); et
- fixer le dispositif de fixation (22) sur la deuxième pièce (16) en utilisant un élément de fixation (44) qui engage l'ancrage (30).

2. Procédé selon la revendication 1, dans lequel la première direction (40) est alignée parallèlement à un axe principal d'ancrage (32) de l'ancrage (30).

3. Procédé selon la revendication 1 ou 2, dans lequel le deuxième élément (28) est agencé sur l'ancrage (30) de telle sorte que, avant l'étape de fixation, il soit mobile au moins d'une manière limitée dans une deuxième direction (52) qui est alignée transversalement par rapport à la première direction (40).

4. Procédé selon l'une des revendications 1 à 3, dans lequel, avant la fixation de la première pièce (12) sur la partie de fixation (26), un gabarit (60) est fixé sur la partie de fixation (26), ledit gabarit étant fixé de façon rigide par rapport à la deuxième pièce (16), dans lequel ensuite la position (42; 54) de la partie de fixation (26) est réglée, dans lequel ensuite le dispositif de fixation (22) est fixé sur la deuxième pièce (16), et dans lequel ensuite le gabarit (60) est enlevé et la première pièce (12) est fixée sur la partie de fixation (26).

5. Dispositif de fixation (22) pour fixer dans une position précise une première pièce (12), qui présente un premier axe principal (14), sur une deuxième pièce (16), qui présente un deuxième axe principal (18), en particulier pour exécuter le procédé selon l'une des revendications 1 à 4, ledit dispositif de fixation comprenant un premier élément (24) et un deuxième élément (28), dans lequel le premier élément (24) comprend une partie de fixation (26) pour la première pièce (12), dans lequel le deuxième élément (28) comprend une partie d'arbre creux (90) qui est introduite dans un évidement axial (92) du premier élément (24), dans lequel le premier élément (24) et le deuxième élément (28) sont mobiles l'un par rapport à l'autre dans le but de régler la partie de fixation (26) dans au moins une première direction (40) par rapport à une surface de support (36) du deuxième élément (28),
**caractérisé en ce que** le deuxième élément (28) comprend un réceptacle (34) pour un ancrage (30) qui est fixé sur la deuxième pièce (16), dans lequel les premier et deuxième éléments (24, 28) peuvent tourner l'un contre l'autre autour d'un axe (32) dans le but de régler la partie de fixation (26) dans au moins la première direction (40) par rapport à la surface de support (36) du deuxième élément (28), dans lequel le premier élément (24) comprend un passage axial (70) à travers lequel un outil de vissage (120) peut être introduit sur ou dans la partie d'arbre creux (90).

6. Dispositif de fixation selon la revendication 5, dans lequel le premier élément (24) comprend un premier dispositif de rampe (72) faisant face au deuxième élément (28), et/ou dans lequel le deuxième élément (28) comprend un deuxième dispositif de rampe (88) faisant face au premier élément (24).

7. Dispositif de fixation selon la revendication 6, dans lequel le premier et/ou le deuxième dispositif(s) de rampe (72; 88) comprend une partie de rampe en forme de vis (104; 108) qui est agencée radialement à l'intérieur, et une partie de rampe en forme de vis (106; 110) qui est agencée radialement à l'extérieur.

8. Dispositif de fixation selon la revendication 5, dans lequel la partie d'arbre creux (90) présente une forme polygonale (114) sur sa circonférence intérieure et/ou sur sa circonférence extérieure, pour appliquer un outil de vissage (120).

9. Dispositif de fixation selon l'une des revendications 5 à 8, dans lequel la partie de fixation (26) du premier élément (24) comprend des moyens de verrouillage (82) pour fixer la première pièce (12) sur le premier élément (24) dans une position précise.

10. Agencement de fixation (10) comprenant une première pièce (12), une deuxième pièce (16) sur laquelle un ancrage (30) est fixé et un dispositif de fixation (22) selon l'une des revendications 5 à 9, qui est fixé dans une position précise sur la deuxième pièce (16) au moyen d'un élément de fixation (44), dans lequel la première pièce (12) est fixée sur une partie de fixation (26) du dispositif de fixation (22).

11. Agencement de fixation selon la revendication 10, dans lequel une partie d'arbre creux (90) du deuxième élément (28) du dispositif de fixation (22) présente un diamètre intérieur (112) qui est plus grand qu'un diamètre extérieur (116) de l'ancrage (30), de telle sorte que, avant sa fixation, le dispositif de fixation (22) soit mobile dans la direction radiale (52, 98) par rapport à l'ancrage (30).
